# FASCICULE DE BREVET EUROPEEN

(11) **EP 3 203 596 B1**
(45) Date de publication et mention de la délivrance du brevet: **06.03.2019**
(21) Numéro de dépôt: 17154669.0
(22) Date de dépôt: 03.02.2017
(51) Int. Cl.: H02J 3/04, H02J 3/38, H02J 3/34

(54) **PROCEDE ET INSTALLATION DE PRODUCTION D'ELECTRICITE A PARTIR D'ENERGIES RENOUVELABLES, AVEC REGULATION DE LA PUISSANCE FOURNIE**
VERFAHREN UND ANLAGE ZUR STROMERZEUGUNG AUS ERNEUERBAREN ENERGIEQUELLEN MIT REGULIERUNG DER GELIEFERTEN STROMSTÄRKE
METHOD AND INSTALLATION FOR PRODUCING ELECTRICITY FROM RENEWABLE ENERGY WITH CONTROL OF THE PROVIDED POWER

(30) Priorité: 05.02.2016 FR 1650934
(43) Date de publication de la demande: 09.08.2017
(73) Titulaire: SOCIETE CIVILE DE BREVETS MATIERE, 15000 Aurillac (FR)
(72) Inventeur: MATIERE, Marcel, 15000 Aurillac (FR)
(74) Mandataire: Lavoix

(56) Documents cités:
- BE-A1- 875 508
- FR-A1- 2 941 574
- FR-A1- 2 983 921

## Description

L'invention a pour objet un procédé et une installation de production d'électricité à partir d'énergies renouvelables, avec régulation de la puissance fournie.

Tous les pays, en particulier industrialisés, sont équipés d'un réseau public général permettant de distribuer l'énergie électrique dans tout le territoire national. Ce réseau public est alimenté par un ensemble de centrales de production d'électricité de très grande puissance, telles que des centrales thermiques utilisant une énergie d'origine fossile, charbon, lignite ou pétrole, ou bien l'énergie nucléaire, ainsi que des centrales hydrauliques utilisant l'énergie d'une chute d'eau dans les régions montagneuses, ou bien celle d'un fleuve tel que le Rhône ou le Rhin, dans des usines au fil de l'eau.

La puissance électrique ainsi produite est répartie sur l'ensemble du territoire par le réseau public de distribution, constitué d'un ensemble de lignes connectées de transport du courant à plus ou moins haute tension.

Depuis quelques années, on a pris conscience de la nécessité, pour la protection de l'environnement, de réduire, autant que possible, les émissions de gaz carbonique qui influent sur le réchauffement climatique, ou de particules produites par la combustion des produits pétroliers, qui ont des effets néfastes pour la santé.

Comme l'utilisation de l'énergie électrique ne présente pas de tels inconvénients, il est probable que les besoins d'alimentation en énergie électrique sur l'ensemble du territoire augmenteront dans l'avenir, notamment pour le chauffage ou pour les transports, en raison du développement prévisible des véhicules électriques. Pour répondre à ces besoins, il faut éviter de faire appel à des centrales classiques qui présentent les mêmes risques pour l'environnement, et c'est pourquoi les autorités publiques, notamment en France, ont pris des mesures pour favoriser l'apport, dans le réseau public, d'une puissance électrique complémentaire en utilisant, autant que possible, des énergies renouvelables fournies, notamment par le vent, le soleil ou les chutes d'eau.

Il est donc nécessaire d'augmenter, à l'échelon national, la production d'électricité sans émission de carbone ou de particules. Les centrales hydroélectriques, utilisées depuis des décennies, répondent parfaitement à ces besoins. Cependant, sauf dans certains pays, il n'existe pratiquement plus de sites naturels favorables à la construction de barrages de grande hauteur. De plus, un tel barrage provoque la submersion d'une vallée entière, ce qui est difficilement accepté par la population.

Il est, donc, plus intéressant de réaliser des installations de petite puissance, dites micro - ou minicentrales hydroélectriques, qui peuvent être réalisées sur une grande partie du territoire, en particulier dans les pays tempérés où la pluviométrie est relativement importante.

De telles installations ne nécessitent qu'un seuil d'assez faible hauteur et limitent, donc, un lac de retenue de petites dimensions.

Il en résulte que la hauteur d'eau en amont de la turbine et, par conséquent, la puissance électrique produite par celle-ci vont diminuer au cours de la vidange de la retenue d'eau.

Pour remédier à cet inconvénient, le document FR-A-2 983 921 décrit une installation de production d'énergie comprenant un réservoir débouchant, à sa base, dans une conduite d'alimentation d'une turbine de production d'une puissance électrique, munie de moyens de réglage de la section de passage de l'eau et, par conséquent, de la puissance produite. Pour éviter une instabilité de la production due à la baisse du niveau d'eau dans le réservoir, l'installation comporte, en outre, une pompe permettant de refouler l'eau d'une source extérieure dans le réservoir afin de maintenir le niveau de l'eau. Cette pompe est actionnée par une énergie électrique produite à partir d'énergie renouvelable, par exemple une éolienne ou des panneaux photovoltaïques.

De plus, les moyens de réglage de la section du conduit d'alimentation de la turbine sont pilotés en fonction de la puissance produite, afin de maintenir celle-ci à une valeur de consigne correspondant aux besoins du réseau alimenté par l'installation.

Une telle installation est prévue pour alimenter un réseau électrique, de préférence pour alimenter un réseau domestique et non pas pour produire une puissance complémentaire pouvant être injectée dans un réseau public de transport et de distribution, dans l'ensemble du territoire national, de l'énergie produite par un ensemble de centrales de très grande puissance, afin de répondre à une augmentation prévisible des besoins de consommation.

Mais d'autres énergies renouvelables peuvent être utilisées à cet effet.

Actuellement, par exemple, on réalise surtout des centrales éoliennes, cette énergie étant bien répartie sur le territoire mais avec l'inconvénient d'une grande irrégularité. C'est pourquoi, pour capter des vents plus réguliers, les hélices doivent, généralement, être placées à une très grande hauteur, pouvant dépasser 100 mètres, ce qui n'est pas sans conséquences pour l'environnement et peut entraîner des oppositions de la part des riverains.

L'énergie solaire, en revanche, présente moins d'inconvénients pour l'environnement car elle permet de produire de l'électricité, par effet photoélectrique, au moyen de modules photovoltaïques constituant des panneaux plats de faible épaisseur et, par conséquent, de hauteur réduite.

D'une façon générale, une centrale solaire comprend, donc, un ensemble de modules photovoltaïques reliés entre eux et raccordés au réseau de distribution par des moyens de transformation permettant de produire un courant alternatif ayant des caractéristiques adaptées aux conditions d'exploitation de ce réseau.

De telles installations peuvent avoir des puissances très variées qui dépendent du nombre de modules et de la surface couverte. C'est ainsi que l'on peut placer un petit nombre de panneaux sur le toit d'un immeuble ou d'une maison individuelle.

Le document FR 2 941 574, par exemple, décrit un dispositif de production d'énergie électrique par un module photovoltaïque, pour l'alimentation d'une habitation isolée. Pour résoudre le problème de l'irrégularité de la production photovoltaïque qui est nulle la nuit et ne correspond, donc, pas à la période de consommation maximale, il est prévu de stocker une énergie hydraulique dans un accumulateur alimenté à partir d'un réservoir à pression atmosphérique, au moyen d'un groupe motopompe fonctionnant grâce à l'énergie électrique produite par le module photovoltaïque.
Auparavant, il avait aussi été prévu, dans le document BE 875 508, d'associer une centrale solaire à une centrale hydroélectrique. Dans ce cas, la centrale hydroélectrique comprend deux bassins placés à des niveaux différents, respectivement un bassin inférieur retenu par un barrage ménagé sur un cours d'eau pour l'entraînement d'un groupe hydroélectrique, et un bassin supérieur relié au bassin inférieur par une station de pompage entraînée par l'énergie électrique produite par des panneaux solaires placés autour du bassin supérieur et permettant d'aspirer l'eau du bassin inférieur pour la refouler dans le bassin supérieur afin d'y stocker de l'énergie hydraulique.
Dans une telle disposition, l'énergie solaire est utilisée pour actionner la pompe, comme dans le document FR 2 983 921, ce qui ne demande qu'une puissance réduite.
Une telle disposition ne permettrait donc pas d'injecter dans un réseau public de distribution, la puissance complémentaire nécessaire pour répondre à une augmentation prévisible des besoins locaux de consommation.

Pour résoudre un tel problème, il est donc nécessaire de rassembler un très grand nombre de modules sur un espace important pour une production plus exploitable industriellement car il est ainsi possible de réaliser une véritable centrale électrique dont la puissance dépend de la surface couverte par les modules photovoltaïques et peut être, par exemple, d'environ 10 MW pour une surface de panneaux d'une vingtaine d'hectares. Mais il est possible d'augmenter la surface couverte par les panneaux afin de produire une puissance très élevée pouvant aller, dans certains cas, jusqu'à 100 MW.

En effet, même pour une telle puissance, les modules peuvent être répartis en plusieurs sections en tenant compte du relief du terrain et, en raison de la hauteur assez réduite des panneaux photovoltaïques, il est possible de les cacher derrière un simple rideau d'arbres.

Les centrales solaires, même de grande puissance, présentent donc l'avantage de pouvoir être réparties sur l'ensemble du territoire avec un faible impact sur l'environnement, afin d'injecter dans le réseau public une puissance complémentaire permettant de compenser les variations des besoins de consommation, même dans les zones protégées.

Cependant, cet apport de puissance localisé et occasionnel risque de perturber l'équilibre du réseau de distribution. C'est pourquoi, les conditions dans lesquelles de telles installations peuvent être raccordées au réseau sont réglementées par les pouvoirs publics qui n'autorisent la construction et le raccordement d'une installation nouvelle que dans le cadre d'un contrat d'achat, par le distributeur, de la puissance électrique produite par l'installation.

Ces conditions d'achat dépendent, évidemment, de la valeur de la puissance injectée dans le réseau car il est intéressant, pour le distributeur, d'absorber une puissance importante correspondant aux besoins d'un territoire, plutôt que celle produite par quelques panneaux et correspondant simplement aux besoins d'un réseau domestique. Mais il est surtout important que la puissance injectée soit suffisamment stable afin d'éviter des perturbations dans l'équilibre du réseau.

C'est pourquoi, dans le contrat d'achat, l'exploitant de la centrale doit, normalement, s'engager à maintenir la puissance injectée dans le réseau à une valeur sensiblement stable, le prix d'achat étant réduit si cet engagement n'est pas respecté.

Dans le cas d'une centrale hydroélectrique, une telle régulation de la puissance produite peut être réalisée en réglant simplement le débit d'alimentation en eau de la turbine.

En revanche, le rayonnement solaire, ne peut, évidemment, être capté que pendant la journée et dépend, en outre, de la hauteur du soleil. La puissance électrique pouvant être produite par une centrale solaire dépend, donc, non seulement des conditions atmosphériques, mais aussi de l'heure au cours de la journée et de la saison. Jusqu'à présent, par conséquent, en raison de cette irrégularité de la puissance fournie au réseau, l'utilisation des centrales solaires ne se développe pas comme on l'espérait, malgré les nombreux avantages présentés par cette technique, en particulier le faible impact d'une centrale solaire sur l'environnement, même pour une grande puissance, ainsi que le grand nombre de sites exploitables et leur répartition sur tout le territoire.

L'invention a pour objet de remédier à ces inconvénients grâce à un nouveau procédé permettant de compenser les variations inévitables de rendement énergétique d'une centrale solaire, afin d'injecter dans le réseau de distribution une puissance électrique relativement stable, respectant les engagements pris par l'exploitant.

L'invention concerne donc, d'une façon générale, un procédé de production d'une puissance électrique, à partir d'énergie renouvelable, dans une installation d'alimentation d'un réseau électrique comprenant au moins deux dispositifs de transformation d'au moins deux énergies renouvelables en un courant électrique ayant des caractéristiques adaptées à celles du réseau, respectivement un premier dispositif de transformation de l'énergie du rayonnement solaire et un second dispositif de transformation de l'énergie hydraulique, comportant un groupe de production hydroélectrique alimenté à partir d'une réserve d'eau par au moins une conduite d'écoulement de l'eau munie de moyens de réglage de la puissance électrique fournie par ledit second dispositif de transformation.

Conformément à l'invention, le réseau électrique alimenté par l'installation est un réseau public général de transport et de distribution dans l'ensemble d'un territoire, de l'énergie électrique produite par des centrales de très grande puissance, que le premier dispositif de transformation est une centrale solaire produisant une puissance électrique complémentaire qui est injectée en permanence dans le réseau public de distribution par un poste de livraison auquel est raccordée la centrale solaire, que cette puissance complémentaire injectée doit avoir une valeur stable réglementée par un contrat d'engagement de l'exploitant de l'installation, que le second dispositif de transformation est une centrale hydroélectrique comprenant un groupe de production relié à une réserve d'eau par au moins une conduite d'écoulement munie de moyens de réglage, en permanence, de la puissance produite, que cette centrale hydroélectrique a une puissance nominale du même ordre que celle de la centrale solaire et est branchée, en parallèle, sur le même poste de livraison que celle-ci, pour l'injection, dans le réseau général, du courant électrique produit, à chaque instant, par ladite centrale hydroélectrique, et que les moyens de réglage de la puissance produite par la centrale hydroélectrique sont commandés par une unité de contrôle qui mesure, en permanence, la puissance fournie par la centrale solaire et calcule, à chaque instant, la puissance complémentaire à fournir par la centrale hydroélectrique, afin de commander les moyens de réglage de puissance de façon que la puissance globale injectée par le poste de livraison dans le réseau général de distribution soit maintenue en permanence à une valeur sensiblement constante correspondant au contrat d'engagement de l'exploitant, pour la fourniture au réseau général, de la puissance complémentaire programmée.

De façon particulièrement avantageuse, la centrale solaire est d'un type comprenant un ensemble de panneaux photovoltaïques couvrant une surface d'au moins un hectare afin de fournir une puissance nominale d'au moins 5 MW.

Dans un mode de réalisation préférentiel, la réserve d'eau présente un volume variable, permettant d'accumuler, pendant les périodes de fort ensoleillement, une quantité d'eau suffisante pour la production, par le groupe hydroélectrique, d'une puissance capable de compenser une réduction de la production de la centrale solaire pendant les périodes d'ensoleillement faible ou nul, afin de maintenir de façon relativement stable la puissance électrique globale injectée dans le réseau public de distribution à une valeur d'engagement de l'exploitant.

L'invention couvre également une installation pour la mise en oeuvre du procédé comprenant au moins deux dispositifs de transformation en puissance électrique d'au moins deux énergies renouvelables, branchés sur le réseau, respectivement un premier dispositif de transformation de l'énergie du rayonnement solaire et un second dispositif de transformation de l'énergie hydraulique comportant un groupe de production hydroélectrique alimenté à partir d'une réserve d'eau par au moins une conduite d'écoulement de l'eau, et des moyens de réglage de la puissance électrique fournie par ledit second dispositif de transformation.

Conformément à l'invention, le réseau électrique alimenté par l'installation est un réseau public général de transport et de distribution, dans l'ensemble d'un territoire, de l'énergie électrique produite par des centrales de très grande puissance, que le premier dispositif de transformation est une centrale solaire produisant une puissance électrique complémentaire qui est injectée en permanence dans le réseau public de distribution par un poste de livraison auquel est raccordée la centrale solaire, la puissance complémentaire ainsi injectée devant avoir une valeur stable réglementée par un contrat d'engagement de l'exploitant de l'installation, que le second dispositif de transformation est une centrale hydroélectrique comprenant un groupe de production relié à une réserve d'eau par au moins une conduite d'écoulement munie de moyens de réglage, en permanence, de la puissance produite, que cette centrale hydroélectrique a une puissance nominale du même ordre que celle de la centrale solaire et est branchée, en parallèle, sur le même poste de livraison, de façon à injecter au même endroit du réseau général, les puissances électriques produites, respectivement, par la centrale solaire et par la centrale hydroélectrique, et que les moyens de réglage de la puissance produite par la centrale hydroélectrique sont commandés par une unité de contrôle recevant un signal de mesure, en permanence, de la puissance fournie par la centrale solaire et calculant, à chaque instant, la puissance à fournir par la centrale hydroélectrique, afin de commander les moyens de réglage du débit d'eau alimentant celle-ci, de façon que la puissance globale injectée par le poste de livraison dans le réseau général de distribution soit maintenue en permanence à une valeur sensiblement constante correspondant au contrat d'engagement de l'exploitant, pour la fourniture au réseau général, de la puissance complémentaire programmée par contrat. celles du réseau général, que ladite centrale solaire étant branchée sur un poste de livraison raccordé au réseau général pour l'injection, en permanence, dans celui-ci, dudit courant adapté, et le second dispositif de transformation est une centrale hydroélectrique comprenant un groupe de production alimenté par au moins une conduite d'écoulement à partir d'une réserve d'eau alimentée, elle-même, par au moins un cours d'eau et située au-dessus du niveau de la centrale solaire, dans le voisinage de celle-ci, ladite centrale hydroélectrique étant branchée, en parallèle, sur le même poste de livraison que la centrale solaire, pour l'injection, dans le réseau général, du courant électrique produit par ladite centrale hydroélectrique, après transformation en un courant alternatif ayant des caractéristiques adaptées au réseau général de distribution, et les moyens de réglage de la puissance électrique fournie par la centrale hydroélectrique sont commandés par une unité de contrôle comportant des moyens de mesure, en permanence, de la puissance fournie par la centrale solaire et des moyens de calcul, à chaque instant, de la puissance complémentaire à fournir par la centrale hydroélectrique, afin de régler à une valeur sensiblement constante la puissance globale injectée dans le réseau général de distribution par le poste de livraison.

De façon particulièrement avantageuse, la centrale solaire est du type comprenant un ensemble de panneaux photovoltaïques capables de fournir une puissance électrique d'au moins 5 MW.

Dans un autre mode de réalisation, la centrale solaire est du type thermodynamique permettant de transformer l'énergie rayonnée par le soleil en chaleur, puis celle-ci en énergie mécanique et électrique. En particulier, les moyens de captation de l'énergie solaire peuvent aussi être constitués d'un ensemble de miroirs faisant converger le rayonnement solaire vers des moyens de production d'un gaz sous pression susceptible d'actionner un groupe turbo-alternateur pour la production d'un courant électrique.

Selon une autre caractéristique particulièrement avantageuse, la centrale hydroélectrique est installée à une distance assez réduite de la centrale solaire pour permettre le transport de la puissance électrique qu'elle fournit jusqu'au poste de livraison, sans perte notable d'énergie.

Dans un mode de réalisation préférentiel, la centrale hydroélectrique comprend au moins un barrage ménagé sur au moins un cours d'eau et placé en un endroit permettant de réaliser un lac de retenue d'eau relié au groupe hydroélectrique par au moins une conduite d'écoulement et dont la capacité peut varier en fonction de la puissance à fournir et du débit d'alimentation par le cours d'eau, de telle sorte que le lac de retenue forme une réserve d'eau de volume variable, capable de délivrer ou d'accumuler de l'eau selon la puissance hydroélectrique nécessaire pour compenser les variations de la puissance fournie par la centrale solaire.

Selon une autre caractéristique préférentielle, la centrale hydroélectrique comprend au moins une conduite d'écoulement de grande section s'étendant entre un seuil de retenue ménagé, à un premier niveau, sur un cours d'eau, au-dessus du niveau de la centrale solaire et un groupe hydroélectrique placé à un second niveau, inférieur au premier, et la section transversale de ladite conduite d'écoulement est déterminée, compte tenu de la distance entre le seuil de retenue et le groupe hydroélectrique, de façon à limiter un volume d'eau suffisant pour assurer le fonctionnement de la centrale hydroélectrique quelles que soient les variations de la production demandée, au moins une partie de la réserve d'eau étant alors constituée par l'eau contenue dans ladite conduite d'écoulement.

Dans un mode de réalisation particulièrement avantageux, cette conduite d'écoulement de grande section est réalisée à partir d'éléments préfabriqués en béton armé ou précontraint et comporte, en section transversale, un élément de voûte prenant appui sur deux éléments de coté formant des piédroits écartés ayant une partie supérieure se raccordant à l'élément de voûte et une base plane posée sur le sol et se raccordant à une dalle coulée sur place afin de suivre le profil du terrain naturel.

Dans un autre mode de réalisation avantageux, la conduite d'écoulement de grande section comprend une série d'éléments cintrés en tôle métallique soudés les uns à la suite des autres et ayant leurs extrémités soudées sur des profilés en attente scellés dans une base en béton coulée sur place, de façon à suivre le profil du terrain naturel.

Selon une autre caractéristique préférentielle, l'installation comporte un système-tampon branché sur le poste de livraison et permettant d'emmagasiner de l'énergie ou de la redistribuer vers le réseau de distribution en cas de variation excessive de la puissance complémentaire à fournir par la centrale hydroélectrique.

Dans un premier mode de réalisation, le système-tampon est un volant d'inertie.

Dans un autre mode de réalisation, le système-tampon est une batterie d'accumulation d'au moins une partie de la puissance électrique fournie globalement par la centrale solaire et la centrale hydroélectrique.

Par ailleurs, lorsque les circonstances le permettent, il peut être avantageux de réaliser l'installation pour la mise en oeuvre de l'invention le long du littoral marin, la seconde centrale à énergie renouvelable étant, alors, d'un type exploitant les mouvements de la mer tels que la houle, les vagues, les courants sous-marins ou les marées.

D'autres caractéristiques avantageuses de l'invention apparaîtront dans la description détaillée qui va suivre, de certains modes de réalisation donnés à titre d'exemple, en se référant aux dessins annexés.
La figure 1 est une vue schématique, en élévation, de l'ensemble d'une installation pour la mise en oeuvre du procédé selon l'invention.
La figure 2 montre les variations, sur une année, de la valeur moyenne de l'énergie fournie, chaque mois, par une unité de production photovoltaïque ayant une puissance moyenne.
La figure 3 montre les variations, sur une année, de la valeur moyenne de l'énergie fournie, chaque mois, par une petite centrale hydroélectrique ayant une puissance du même ordre que la centrale solaire de la figure 2.
La figure 4 est un diagramme montrant les variations, heure par heure, de la puissance optimale pouvant être fournie par une centrale solaire au cours d'une même journée.
La figure 5 montre comment la puissance d'une centrale hydroélectrique associée à une centrale solaire, peut être réglée afin de compenser les variations de la puissance fournie par celle-ci.
La figure 6 est un diagramme montrant un exemple de variation, heure par heure, de la puissance fournie réellement par une centrale solaire.
La figure 7 montre schématiquement, en perspective, les circuits de couplage d'une centrale solaire et d'une centrale hydroélectrique.
La figure 8 est une vue schématique, en perspective, d'un autre mode de réalisation d'une installation pour la mise en oeuvre du procédé selon l'invention.
La figure 9 est une vue schématique, en élévation, de l'ensemble d'une installation du type représenté sur la figure 7.
La figure 10 est une vue en coupe transversale d'une conduite de très grande section utilisable dans une installation du type représenté sur les figures 7 et 8.
La figure 11 est une vue en coupe transversale d'un autre type de conduite de très grande section

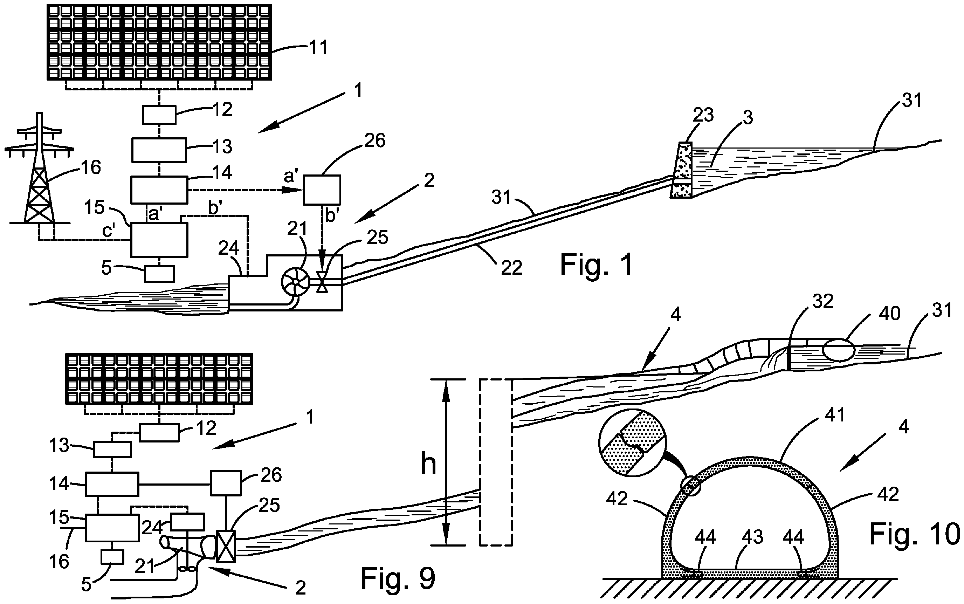

Sur la partie gauche de la figure 1, on a représenté schématiquement une installation 1 de production d'électricité par énergie solaire, comportant, comme habituellement, un ensemble de modules photovoltaïques interconnectés électriquement en série ou en parallèle et alignés de façon à former un certain nombre de panneaux 11 montés sur des châssis reposant sur le sol.

Ces panneaux 11 sont reliés par des câbles de raccordement à des boites de jonction 12 d'où le courant continu à basse tension produit par les modules est transmis à des onduleurs placés dans un local technique 13 afin de transformer le courant continu en un courant alternatif. Ce courant alternatif à basse tension, par exemple 380 V, est transmis à un poste de transformation 14 qui produit un courant alternatif ayant des caractéristiques adaptées au réseau de distribution, par exemple une tension de 20 000 Volts. Le courant alternatif à haute tension ainsi produit peut alors être injecté dans le réseau dans le réseau de distribution 16 par l'intermédiaire d'un poste de livraison 15.

Toutes ces dispositions sont bien connues et ne nécessitent pas une description détaillée.

L'ensemble des panneaux photovoltaïques 11 couvre une surface importante qui dépend des possibilités d'implantation et de la production à fournir. On sait, par exemple, qu'une centrale photovoltaïque telle que celle de Sainte Tulle, en France, comportant 70 000 modules et couvrant une superficie d'environ 20 hectares, peut fournir une puissance nominale d'environ 5 MW_{c} (Mégawatts crête). Ces panneaux 11 sont orientés, normalement, au sud et inclinés d'un angle d'exposition pouvant varier de 25 à 30° en fonction de la topographie locale. Cependant, la capacité de production dépend évidemment, d'une part de la couverture nuageuse et, d'autre part, de la hauteur du soleil et, par conséquent de la saison et de l'heure dans la journée.

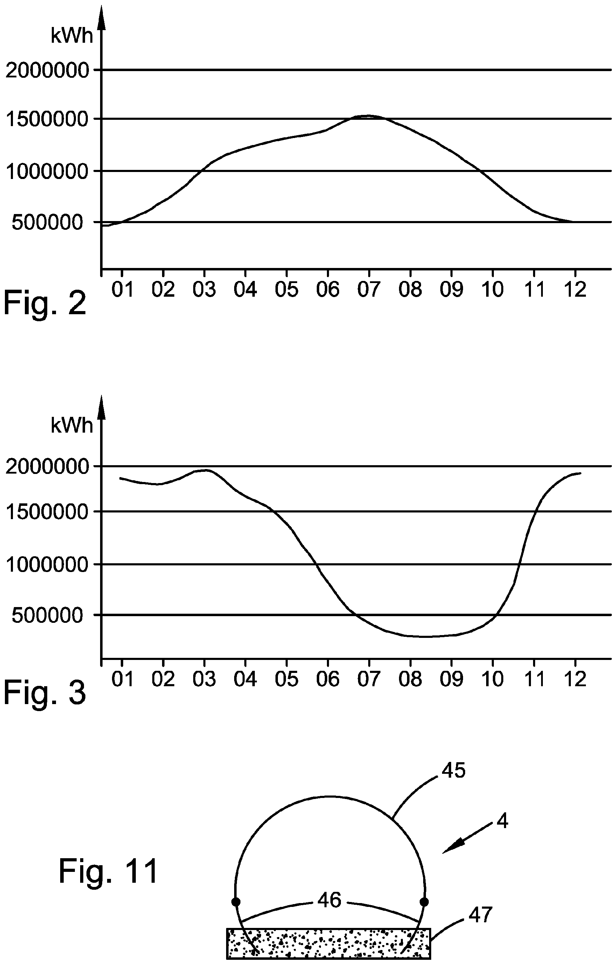

Par exemple, la figure 2 montre les variations, sur une année, de la valeur moyenne, en kWh, de l'énergie fournie, chaque mois, par une centrale solaire installée dans le centre de la France. Comme on pouvait s'y attendre, il apparaît que la quantité d'énergie fournie chaque mois par cette centrale est maximale entre Juin et Septembre et peut atteindre 1 500 000 kWh, mais se réduit à moins de 500 000 kWh en hiver.

En revanche, la capacité de production d'une centrale hydroélectrique, qui dépend du débit d'eau alimentant les turbines, est, normalement, plus élevée en hiver et, surtout, au printemps, lorsque les précipitations sont importantes et c'est le cas, en particulier, pour les petites centrales qui sont souvent aménagées au fil de l'eau et, de toutes façons, ne bénéficient pas d'une réserve d'eau importante, retenue par un barrage de grande hauteur.

La figure 3, par exemple, montre les variations, sur une année, de la valeur moyenne, en kWh, de la puissance fournie, chaque mois, par une petite centrale hydroélectrique ayant une puissance installée de 8 MW et prévue pour une production annuelle moyenne de l'ordre de 14 000 000 kWh, avec une hauteur de chute de 350 m et une capacité de stockage d'environ 300 000 m³. Il apparaît que la quantité d'énergie fournie chaque mois, est maximale entre Décembre et Avril et très réduite entre Juillet et Octobre.

Ainsi, il existe une certaine complémentarité entre ces deux types d'énergie qui ne varient pas de la même façon au cours de l'année. Il apparaît, donc, que l'on peut compenser, au moins partiellement, les variations saisonnières de l'énergie produite par une centrale solaire, en associant à celle-ci une centrale hydroélectrique placée à proximité et bénéficiant, ainsi, des mêmes conditions météorologiques, le réseau de distribution pouvant, alors, être alimenté par les courants fournis, simultanément, par les deux centrales.

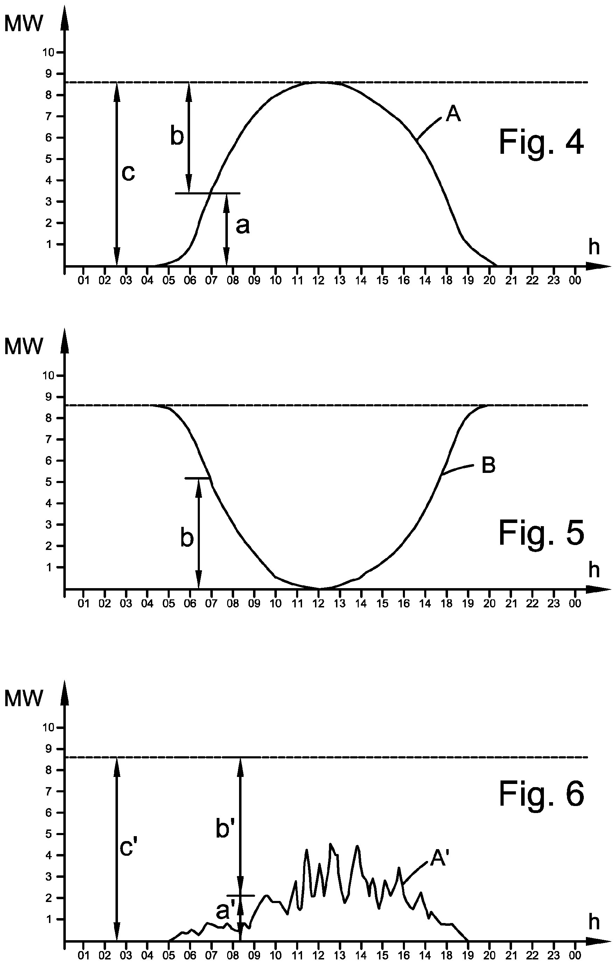

Mais l'inventeur s'est avisé, en outre, que, si l'on a peu de prise sur l'énergie fournie par la centrale solaire qui dépend essentiellement du rayonnement capté par les panneaux photovoltaïques et n'est, donc, pas maitrisable, en revanche la puissance fournie par la centrale hydroélectrique peut être réglée en permanence, en agissant sur le débit d'eau admis dans les turbines. Il a, donc, eu l'idée que ce complément d'énergie apporté par la centrale hydroélectrique pourrait être réglé à chaque instant afin de compenser immédiatement les variations journalières, de l'énergie solaire captée par les panneaux photovoltaïques et, ainsi, de maintenir à un niveau relativement stable la puissance globale injectée dans le réseau. Une telle possibilité peut être illustrée par les diagrammes des figures 4 et 5.

D'une façon générale, une centrale solaire est prévue pour fournir une puissance nominale, dite aussi « Puissance crête » qui peut être déterminée en tenant compte du site où elle est implantée et de ses caractéristiques techniques, notamment les performances des panneaux photovoltaïques et la surface couverte, la .puissance fournie à chaque instant variant, évidemment, en fonction de l'heure dans la journée.

A titre d'exemple, la figure 4 est un diagramme indiquant la variation, heure par heure, de la puissance optimale pouvant être fournie par une centrale solaire prévue pour une puissance crête de 8,5 MW_{c.} Comme le montre la courbe A, qui correspond à un ensoleillement maximal, en été, pour une latitude moyenne, avec un lever du soleil vers 5h et un coucher vers 20h, la capacité de production (a) augmente progressivement à partir de l'aube, atteint sa valeur maximale de 8,5 MW à l'heure de la méridienne (12h au soleil), puis diminue jusqu'à s'annuler après le coucher.

Selon l'invention, cette centrale solaire est associée à une centrale hydroélectrique dont la puissance peut être modifiée en réglant le débit d'eau admis dans les turbines.

Comme le montre la figure 5, grâce à un tel réglage, il est possible de faire varier la puissance hydroélectrique suivant une courbe B, inverse de la courbe A, de telle sorte que, à tout moment, la centrale hydroélectrique produise une puissance (b) sensiblement égale à la différence entre la puissance (a) produite par la centrale solaire et la puissance maximale souhaitée (c). Ainsi, la puissance globale injectée dans le réseau peut être maintenue, de façon relativement stable, à cette valeur maximale (c).

Cependant, la courbe A de la figure 4 correspond à des conditions optimales de fonctionnement et l'on sait bien que la puissance produite par le rayonnement solaire dépend essentiellement des conditions météorologiques. En réalité, même si elle augmente jusque vers midi puis diminue jusqu'au coucher du soleil, la capacité de production photovoltaïque va suivre un parcours en dents de scie du type représenté par la courbe A' sur la figure 6. Mais, selon l'une des caractéristiques de l'invention, il est possible de mesurer en permanence la puissance (a') fournie par la centrale solaire et de régler, à chaque instant, la puissance fournie par la centrale hydroélectrique à une valeur (b') égale à la différence entre la puissance solaire (a') et la puissance souhaitée (c'), afin de maintenir la puissance globale fournie au réseau, de façon relativement stable, à cette valeur souhaitée (c').

Les deux centrales, respectivement solaire et hydroélectrique, utilisées pour la mise en oeuvre d'un tel procédé, doivent être réalisées à proximité l'une de l'autre, c'est-à-dire à une distance permettant le transport du courant sans perte notable d'énergie. A cet égard, il y a lieu de noter que, même pour une capacité de production moyenne, les panneaux photovoltaïques couvrent une superficie importante, de l'ordre de plusieurs hectares. Les centrales solaires sont donc implantées, généralement, dans des zones peu habitées, par exemple sur des collines bien ensoleillées. Or, dans les régions tempérées, de telles zones sont, habituellement, assez bien arrosées par des sources, des ruisseaux ou des torrents. Il devrait donc être possible de trouver, dans le voisinage d'une centrale solaire, c'est-à-dire à une distance de l'ordre de quelques centaines de mètres , un site placé au-dessus du niveau de la centrale solaire et permettant de réaliser une réserve d'eau retenue par une digue ou un petit barrage et alimentée par un ou plusieurs ruisseaux, qui pourra être reliée par conduite forcée à une centrale hydroélectrique implantée à proximité immédiate de la centrale solaire.

L'ensemble des deux centrales forme, donc, un complexe hybride représenté schématiquement sur la figure 1 et comprenant, à proximité de la centrale solaire 1 décrite plus haut, une usine hydroélectrique 2 comportant, comme habituellement, un groupe de production hydroélectrique 21 constitué d'une ou plusieurs turbines hydrauliques alimentées par une ou plusieurs conduites forcées 22 à partir d'au moins une réserve d'eau 3 placée à un niveau supérieur à celui des turbines 21 et retenue par un barrage 23 ménagé en travers d'un cours d'eau 31 ou d'un canal d'amenée. Les turbines 21 entraînent un générateur électrique branché sur un poste de transformation 24 prévu pour produire un courant alternatif ayant les mêmes caractéristiques que le courant produit par le poste de transformation 14 de la centrale solaire 1. Ce courant est, donc, adapté au réseau général de distribution 16 et peut, ainsi, être appliqué sur le même poste de livraison 15 qui est, donc, alimenté en parallèle par la centrale solaire 1 et la centrale hydroélectrique 2.

Comme habituellement, la centrale hydroélectrique 2 est équipée de moyens de régulation de la puissance du courant électrique qu'elle peut fournir, par exemple des moyens 25 de réglage du débit d'eau injecté dans les turbines 21 par la conduite forcée 22.

D'autre part, la puissance (a') du courant électrique produit par le poste de transformation 14 de la centrale solaire 1 est mesurée en permanence et un signal correspondant est appliqué sur une unité de contrôle 26 qui calcule, à chaque instant, la puissance (b') à fournir par la centrale hydroélectrique 2 pour compenser les variations de la puissance (a') et émet un ordre correspondant de commande de l'organe 25 de réglage du débit d'eau introduit dans les turbines 21, afin d'obtenir cette puissance (b') souhaitée. Comme le montre la figure 6, il est ainsi possible de régler à une valeur sensiblement constante, la puissance globale (c'=a'+b') injectée dans le réseau 16 par le poste de livraison 15. Comme on l'a indiqué, cette valeur de consigne correspond aux engagements pris par l'exploitant dans le contrat d'achat, par le distributeur, de la puissance produite.

L'ensemble de l'installation comportant les deux centrales couplées, solaire 1 et hydroélectrique 2 donne, donc, la capacité de produire, à partir d'énergies renouvelables, une puissance programmée relativement stable.

Comme on l'a indiqué plus haut, en se référant aux figures 2 et 3, la capacité de production de la centrale hydroélectrique 2, qui dépend de la pluviométrie est, normalement, plus grande à la mauvaise saison et permet donc, au cours de l'année, de compenser la variation saisonnière de la capacité de production de la centrale solaire 1 qui dépend de l'ensoleillement.

Toutefois, si l'on peut, généralement, trouver, à proximité d'une centrale solaire, un site suffisamment arrosé pour constituer une réserve d'eau, il faut encore que la capacité de celle-ci permette d'assurer la production électrique souhaitée à tout moment et en toutes circonstances.

C'est pourquoi, il est préférable que le barrage 23 soit placé en un endroit permettant de réaliser une retenue d'eau dont la capacité peut varier en fonction de la production demandée et du débit d'alimentation par le cours d'eau 31 mais doit rester toujours suffisante pour faire face à toutes les situations, par exemple une longue période de mauvais temps réduisant la production photovoltaïque ou, au contraire, une période de sécheresse réduisant durablement l'alimentation en eau..

Ainsi, dans les périodes de fort ensoleillement où la puissance fournie par la centrale solaire 1 est proche de la valeur maximale souhaitée, le débit d'eau alimentant les turbines 21 peut être faible ou nul et il est, alors, possible de laisser monter le niveau de l'eau pour augmenter la capacité de la réserve 3 qui reste alimentée en permanence par le ou les cours d'eau 31 et peut, ensuite, être suffisante, même en période de faible pluviosité, pour maintenir la puissance électrique fournie à la valeur souhaitée pendant une période déterminée, afin de respecter les engagements pris par l'exploitant pour la fourniture au réseau de distribution d'une puissance relativement stable.

Il est à noter, cependant, que l'énergie photovoltaïque a une inertie très faible et une amplitude de variation importante alors que l'hydroélectricité est, au contraire, une énergie prévisible et réglable, mais avec une inertie plus importante. Ainsi, la vitesse de régulation du photovoltaïque est de l'ordre de quelques secondes alors qu'une variation de puissance hydroélectrique demande quelques minutes.

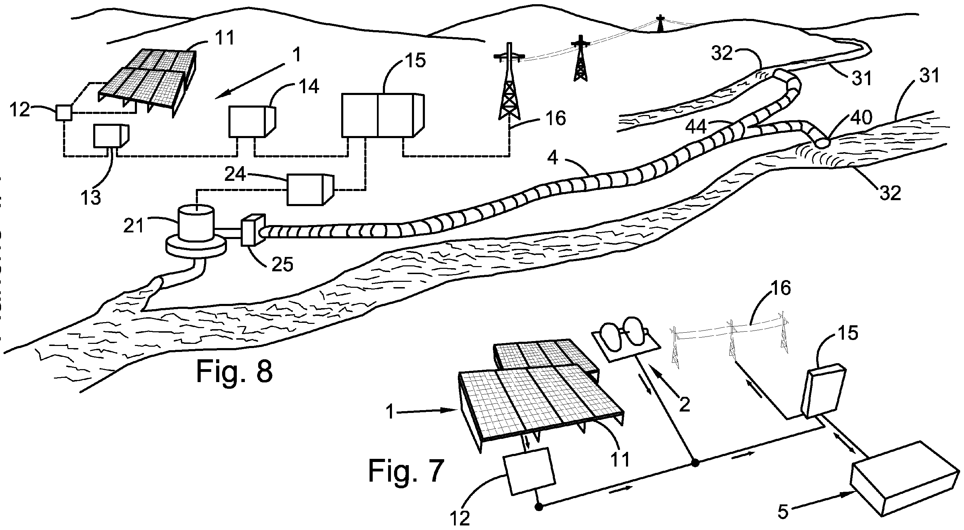

Afin de compenser cette différence d'inertie et pour fournir une puissance globale relativement stable, il est particulièrement avantageux de compléter l'installation décrite plus haut de la façon indiquée sur la figure 7, en branchant sur le poste de livraison 15, un système ayant un rôle de stock-tampon 5 comme, par exemple, un ensemble de batteries d'accumulation de courant ou un volant d'inertie permettant d'emmagasiner de l'énergie ou de la redistribuer dans le réseau 16, en cas de variation excessive de la puissance à fournir.

L'invention permet ainsi de compenser avec souplesse les variations quotidiennes ou saisonnières de la puissance fournie par la centrale photovoltaïque afin de respecter les engagements de l'exploitant en répondant à toutes les situations.

Mais l'invention ne se limite pas aux dispositions qui viennent d'être décrites à titre d'exemple et couvre, au contraire, toutes les variantes restant dans le cadre de protection défini par les revendications et permettant, notamment, de s'adapter à des situations particulières.

Par exemple, on a indiqué plus haut que la puissance complémentaire fournie par la centrale hydroélectrique peut être régulée par réglage du débit d'eau admis dans les turbines mais on pourra, évidemment, utiliser, à cet effet, tous les moyens connus pour le fonctionnement d'une telle centrale.

D'autre part, la répartition des cours d'eau ou le relief du territoire autour d'une centrale solaire peut rendre difficile la réalisation d'un barrage ayant une capacité de retenue suffisante et placé au-dessus de la centrale hydroélectrique 2, à une hauteur permettant l'alimentation de celle-ci par conduite forcée. Il peut, alors, être intéressant d'adopter une disposition du type représenté sur les figures 8 et 9, dans laquelle la centrale hydroélectrique 2 est alimentée à partir d'un simple seuil au fil de l'eau 32, ménagé sur le cours d'eau 31 et relié à la turbine 21 par d'une conduite de grande section 4 pouvant, elle-même, constituer la réserve d'eau.

Dans ce cas, en effet, le seuil 32 n'a pas pour objet de former un lac de retenue de grande capacité mais doit avoir une hauteur seulement suffisante pour dévier l'eau vers l'entrée 40 de la conduite 4, et la section transversale de celle-ci peut être déterminée, compte tenu de la distance entre le seuil 32 et la turbine 21, de façon à limiter un volume d'eau suffisant pour assurer le fonctionnement de la centrale hydroélectrique 2 quelles que soient les variations de la production demandée. La réserve d'eau est, alors, constituée par l'eau contenue dans la conduite d'alimentation 4, depuis la turbine 21 jusqu'au niveau (h) au-dessus de celle-ci.

Pour obtenir la section transversale souhaitée, il est particulièrement avantageux d'utiliser une disposition du type représenté sur la figure 10, dans laquelle la conduite 4 est réalisée à partir d'éléments préfabriqués en béton armé ou précontraint et comporte, en section transversale, un élément de voûte 41 prenant appui sur deux éléments de côté formant des piédroits écartés 42 ayant une partie supérieure incurvée en arc de cercle se raccordant tangentiellement à l'élément de voûte 4 et une base plane 44 posée sur le sol et se raccordant à une dalle 43.

Une telle disposition, décrite notamment dans le document EP 0 081 402 permet de réaliser des conduites ayant une section transversale de plusieurs mètres carrés et présente, en outre, de nombreux avantages dans son application à la présente invention.

En effet, pour la réalisation d'une certaine longueur de conduite, il suffit de préparer le sol sur le trajet prévu, puis de mettre en place deux séries écartées d'éléments de coté 42 se tenant droits sur leur base 44 et sur lesquels sont posés une série d'éléments de voûte 41. On peut, alors, solidariser l'ensemble par une semelle en béton armé 43 coulée entre les extrémités en regard des bases 44 des éléments de coté qui ont été munies d'armatures en attente.

Une telle conduite, constituée d'éléments préfabriqués adjacents, placés à l'avancement l'un à la suite de l'autre, peut avoir une longueur quelconque et son entrée 40 peut donc être éloignée de la centrale 2.

D'autre part, les moules de préfabrication des éléments 41,42 peuvent être adaptés à la position de l'élément le long de la conduite, en modifiant légèrement l'orientation des cotés latéraux. Il est donc possible de faire varier l'orientation, dans le sens horizontal ou vertical, des éléments qui sont reliés par la base en béton 43 coulée sur place et, ainsi, de suivre le profil du terrain naturel sans travaux importants de terrassement, de la façon indiquée sur la figure 9.

En outre, comme le montre la figure 8, on peut, aussi, réaliser une jonction 44 entre des conduites provenant de plusieurs cours d'eau 31,31' afin d'augmenter le débit d'alimentation de la centrale hydroélectrique 2.

Mais d'autres procédés peuvent être utilisés pour réaliser une conduite 4 de très grande section transversale reposant sur une dalle en béton coulée sur place. Par exemple, dans une disposition particulièrement simple représentée sur la figure 11, la conduite 4 pourrait être constituée d'éléments cintrés 45 en tôle métallique, ayant leurs extrémités soudées sur des profilés en attente 46 scellés dans une base en béton 47 coulée sur place. Dans ce cas, il est encore possible d'adapter le profil des éléments de tôle 45 pour réaliser des parties incurvées permettant de suivre le profil du terrain naturel ou des jonctions entre plusieurs conduites.

Il faut, cependant, que la conduite métallique de grande section, qui sert de réservoir, résiste aux différences de pression interne résultant des variations de niveau de l'eau. C'est pourquoi il pourrait, aussi, être avantageux de renforcer la conduite par des contreforts latéraux, de la façon décrite, par exemple, dans le document EP 0 767 881.

Par ailleurs, pour les raisons indiquées plus haut, une centrale hydroélectrique est particulièrement adaptée à la mise en oeuvre du procédé selon l'invention. Cependant, il pourrait être intéressant, dans certains cas, d'exploiter, dans le même but, d'autres énergies renouvelables, par exemple les énergies marines utilisant les mouvements de la houle, des courants ou des marées.

On connait, en effet, divers dispositifs houlomoteurs pouvant entraîner une génératrice et comportant, par exemple, des pales, hélices, flotteurs ou autres organes mécaniques mis en mouvement par le déplacement des vagues, ou bien des hydroliennes actionnées par les courants. De tels dispositifs ne peuvent produire, chacun, qu'une puissance du même ordre qu'une petite éolienne mais plusieurs peuvent être répartis le long d'une côte afin d'obtenir une puissance globale appréciable. Or, le littoral marin est très étendu, en particulier en France, et certains sites, bien ensoleillés, peuvent permettre l'implantation d'une centrale solaire et, à proximité de celle-ci, d'une centrale hydraulique exploitant l'énergie marine et dont la puissance pourra être réglée de façon à compenser les irrégularités de production photovoltaïque.

D'autre part, si la centrale marémotrice très importante réalisée en Bretagne présente un impact négatif sur l'environnement, de nombreux sites permettraient la construction d'installations beaucoup moins encombrantes mais utilisables cependant pour la mise en oeuvre de l'invention.

En effet, on peut encore voir les restes de moulins à marée existant autrefois et comportant, dans un estuaire, une réserve d'eau placée au niveau des plus hautes marées et reliée à la mer par un système de canaux d'alimentation de roues à aubes, muni de vannes permettant de faire circuler l'eau, à marée montante ou descendante, dans le sens de fonctionnement des roues. Un tel système pourrait être adapté en utilisant les techniques actuelles, afin de réaliser une centrale hydraulique actionnée par les marées et équipées d'hélices à pas variable fonctionnant dans les deux sens, selon la marée, et fournissant une production réglable capable de compenser les irrégularités de production d'une centrale solaire installée à proximité. Dans ce cas, la réserve d'eau, remplie aux plus fortes marées, donnerait une capacité d'accumulation permettant de s'adapter à toutes les circonstances, de la façon décrite précédemment.

De façon analogue, d'autres énergies renouvelables comme, par exemple l'énergie thermique liée à la différence de température entre la surface de la mer et les eaux profondes, ou bien l'énergie géothermique, pourraient aussi être utilisées pour apporter une puissance complémentaire capable de compenser les variations quotidiennes ou saisonnières d'une centrale photovoltaïque afin de réguler la puissance globale injectée dans le réseau.

## Revendications

1. Procédé de production d'une puissance électrique, à partir d'énergie renouvelable, dans une installation d'alimentation d'un réseau électrique comprenant au moins deux dispositifs de transformation d'au moins deux énergies renouvelables en un courant électrique ayant des caractéristiques adaptées à celles du réseau, respectivement un premier dispositif (1) de transformation de l'énergie du rayonnement solaire et un second dispositif (2) de transformation de l'énergie hydraulique, comportant un groupe de production hydroélectrique (21) alimenté à partir d'une réserve d'eau (3) par au moins une conduite (22) d'écoulement de l'eau munie de moyens (25) de réglage de la puissance électrique fournie par ledit second dispositif de transformation (2), **caractérisé par le fait que** le réseau alimenté par l'installation est un réseau public général (16) de transport et de distribution dans l'ensemble d'un territoire, de l'énergie électrique produite par des centrales de très grande puissance, que le premier dispositif de transformation est une centrale solaire (1) produisant une puissance électrique complémentaire qui est injectée en permanence dans le réseau public de distribution par un poste de livraison (15) auquel est raccordée la centrale solaire (1), que cette puissance complémentaire injectée doit avoir une valeur stable réglementée par un contrat d'engagement de l'exploitant de l'installation, que le second dispositif de transformation est une centrale hydroélectrique (2) comprenant un groupe de production (21) relié à une réserve d'eau (3) par au moins une conduite d'écoulement (22) munie de moyens (25) de réglage, en permanence, de la puissance produite, que cette centrale hydroélectrique (2) a une puissance nominale du même ordre que celle de la centrale solaire (1) et est branchée, en parallèle, sur le même poste de livraison (15) que celle-ci, pour l'injection, dans le réseau général (16), du courant électrique produit, à chaque instant, par ladite centrale hydroélectrique (2), et que les moyens de réglage (25) de la puissance produite par la centrale hydroélectrique (2) sont commandés par une unité de contrôle (26) qui mesure, en permanence, la puissance (a') fournie par la centrale solaire (1) et calcule, à chaque instant, la puissance complémentaire (b') à fournir par la centrale hydroélectrique (2), afin de commander les moyens de réglage de puissance (25) de façon que la puissance globale (c'= a'+ b') injectée par le poste de livraison (15) dans le réseau général de distribution (16) soit maintenue en permanence à une valeur sensiblement constante correspondant au contrat d'engagement de l'exploitant, pour la fourniture au réseau général (16), de la puissance complémentaire programmée.

2. Procédé de production d'une puissance électrique selon la revendication 1, **caractérisé par le fait que** la centrale solaire (1) est du type comprenant un ensemble (11) de panneaux photovoltaïques couvrant une surface d'au moins un hectare afin de fournir une puissance nominale d'au moins 5 MW.

3. Procédé de production d'électricité selon l'une des revendications précédentes, **caractérisé par le fait que** la réserve d'eau (3) présente un volume variable, permettant d'accumuler, pendant les périodes de fort ensoleillement, une quantité d'eau suffisante pour la production, par le groupe hydroélectrique (21), d'une puissance capable de compenser une réduction de la production de la centrale solaire (1) pendant les périodes d'ensoleillement faible ou nul, afin de maintenir de façon relativement stable la puissance électrique globale (c') injectée dans le réseau public de distribution (16) à une valeur d'engagement de l'exploitant.

4. Installation de production d'une puissance électrique apte à alimenter un réseau d'électricité, comprenant au moins deux dispositifs de transformation en puissance électrique d'au moins deux énergies renouvelables, branchés sur le réseau, respectivement un premier dispositif (1) de transformation de l'énergie du rayonnement solaire et un second dispositif (2) de transformation de l'énergie hydraulique comportant un groupe de production hydroélectrique (21) alimenté à partir d'une réserve d'eau (3) par au moins une conduite (22) d'écoulement de l'eau, et des moyens (25) de réglage de la puissance électrique fournie par ledit second dispositif de transformation (2), **caractérisée par le fait que** le réseau alimenté par l'installation est un réseau public général (16) de transport et de distribution, dans l'ensemble d'un territoire, de l'énergie électrique produite par des centrales de très grande puissance, que le premier dispositif de transformation est une centrale solaire (1) produisant une puissance électrique complémentaire qui est injectée en permanence dans le réseau public de distribution par un poste de livraison (15) auquel est raccordée la centrale solaire (1), la puissance complémentaire ainsi injectée devant avoir une valeur stable réglementée par un contrat d'engagement de l'exploitant de l'installation, que le second dispositif de transformation est une centrale hydroélectrique (2) comprenant un groupe de production (21) relié à une réserve d'eau (3) par au moins une conduite d'écoulement (22) munie de moyens (25) de réglage, en permanence, de la puissance produite, que cette centrale hydroélectrique (2) a une puissance nominale du même ordre que celle de la centrale solaire (1) et est branchée, en parallèle, sur le même poste de livraison (15), de façon à injecter au même endroit du réseau général (16), les puissances électriques produites, respectivement, par la centrale solaire (1) et par la centrale hydroélectrique (2), et que les moyens de réglage (25) de la puissance produite par la centrale hydroélectrique (2) sont commandés par une unité de contrôle (26) recevant un signal de mesure, en permanence, de la puissance (a') fournie par la centrale solaire (1) et calculant, à chaque instant, la puissance (b') à fournir par la centrale hydroélectrique (2), afin de commander les moyens (25) de réglage du débit d'eau alimentant celle-ci, de façon que la puissance globale (c'= a'+ b') injectée par le poste de livraison (15) dans le réseau général de distribution (16) soit maintenue en permanence à une valeur sensiblement constante correspondant au contrat d'engagement de l'exploitant, pour la fourniture au réseau général (16), de la puissance complémentaire programmée par contrat.

5. Installation selon la revendication 4, **caractérisée par le fait que** la centrale solaire (1) est du type comprenant un ensemble (11) de panneaux photovoltaïques capables de fournir une puissance électrique d'au moins 5 MW.

6. Installation selon l'une des revendications 4 et 5, **caractérisée par le fait que** la centrale hydroélectrique (2) est installée à une distance assez réduite de la centrale solaire (1) pour permettre le transport de la puissance électrique (b') qu'elle fournit jusqu'au poste de livraison (15), sans perte notable d'énergie.

7. Installation selon la revendication 6, **caractérisée par le fait que** la centrale hydroélectrique (2) comprend au moins un barrage (23) ménagé sur au moins un cours d'eau (31) et placé en un endroit permettant de réaliser un lac de retenue d'eau (3) relié au groupe hydroélectrique (21) par au moins une conduite d'écoulement (22) et dont la capacité peut varier en fonction de la puissance à fournir et du débit d'alimentation par le cours d'eau (31), de telle sorte que le lac de retenue (3) forme une réserve d'eau de volume variable, capable de délivrer ou d'accumuler de l'eau selon la puissance hydroélectrique nécessaire pour compenser les variations de la puissance fournie par la centrale solaire (1).

8. Installation selon l'une des revendications 4 à 7, **caractérisée par le fait que** la centrale hydroélectrique (2) comprend au moins une conduite d'écoulement de grande section (4) s'étendant entre un seuil de retenue (41) ménagé, à un premier niveau, sur un cours d'eau (31), au dessus du niveau de la centrale solaire (1) et un groupe hydroélectrique (21) placé à un second niveau, inférieur au premier, et que la section transversale de ladite conduite d'écoulement (4) est déterminée, compte tenu de la distance entre le seuil de retenue (41) et le groupe hydroélectrique (21), de façon à limiter un volume d'eau suffisant pour assurer le fonctionnement de la centrale hydroélectrique (2) quelles que soient les variations de la production (b') demandée, au moins une partie de la réserve d'eau (3) étant alors constituée par l'eau contenue dans ladite conduite d'écoulement (4).

9. Installation selon la revendication 8, **caractérisée par le fait que** la conduite d'écoulement de grande section (4) est réalisée à partir d'éléments préfabriqués en béton armé ou précontraint et comporte, en section transversale, un élément de voûte (41) prenant appui sur deux éléments de coté (42) formant des piédroits écartés ayant une partie supérieure se raccordant à l'élément de voûte (41) et une base plane (44) posée sur le sol et se raccordant à une dalle (43) coulée sur place afin de suivre le profil du terrain naturel.

10. Installation selon la revendication 8, **caractérisée par le fait que** la conduite d'écoulement de grande section (4) comprend une série d'éléments cintrés (45) en tôle métallique soudés les uns à la suite des autres et ayant leurs extrémités soudées sur des profilés en attente (46) scellés dans une base en béton (47) coulée sur place, de façon à suivre le profil du terrain naturel.,

11. Installation selon l'une des revendications 4 à 10, **caractérisée par le fait qu'**elle comporte un système- tampon (5) branché sur le poste de livraison (15) et permettant d'emmagasiner de l'énergie ou de la redistribuer vers le réseau de distribution (16) en cas de variation excessive de la puissance complémentaire (b') à fournir par la centrale hydroélectrique (2).

12. Installation selon la revendication 11, **caractérisée par le fait que** le système - tampon (5) est un volant d'inertie.

13. Installation selon la revendication 11, **caractérisée par le fait que** le système-tampon (5) est une batterie d'accumulation d'au moins une partie de la puissance électrique (c') fournie globalement par la centrale solaire (1) et la centrale hydroélectrique (2).

## Patentansprüche

1. Verfahren zur Erzeugung einer elektrischen Leistung aus erneuerbarer Energie in einer Versorgungsanlage eines elektrischen Netzes, das mindestens zwei Vorrichtungen zur Umwandlung von mindestens zwei erneuerbaren Energien in einen elektrischen Strom, der an die Eigenschaften des Netzes angepasste Eigenschaften aufweist, umfasst, jeweils eine erste Vorrichtung (1) zur Umwandlung der Energie der Sonnenstrahlung und eine zweite Vorrichtung (2) zur Umwandlung der Wasserenergie, die eine Einheit (21) zur hydroelektrischen Erzeugung aufweist, die aus einem Wasserreservoir (3) über mindestens eine Wasserströmungsleitung versorgt wird, die mit Mitteln (25) zum Einstellen der von der zweiten Umwandlungsvorrichtung (2) gelieferten elektrischen Leistung ausgerüstet ist, **dadurch gekennzeichnet, dass** das von der Anlage versorgte Netz ein in der Gesamtheit eines Gebiets allgemeines öffentliches Netz (16) für die Übertragung und Verteilung von elektrischer Energie ist, die von Kraftwerken sehr großer Leistungen erzeugt wird, dass die erste Umwandlungsvorrichtung ein Solarkraftwerk (1) ist, das eine zusätzliche elektrische Leistung erzeugt, die laufend von einer Lieferstation (15), mit der das Solarkraftwert (1) verbunden ist, in das öffentliche Verteilernetz eingespeist wird, dass diese zusätzliche eingespeiste Leistung einen stabilen Wert haben muss, der durch einen Verpflichtungsvertrag des Betreibers der Anlage geregelt ist, dass die zweite Umwandlungsvorrichtung ein Wasserkraftwerk (2) ist, das eine Erzeugungseinheit (21) umfasst, die über mindestens eine Strömungsleitung (22), die mit Mitteln (25) zur laufenden Einstellung der erzeugten Leistung ausgerüstet ist, an ein Wasserreservoir (3) angeschlossen ist, dass dieses Wasserkraftwert (2) eine Nennleistung der gleichen Größenordnung, wie die des Solarkraftwerks (1) aufweist und parallel an dieselbe Lieferstation (15) wie dieses angeschlossen ist, um zu jedem Zeitpunkt von dem Wasserkraftwerk (2) erzeugten elektrischen Strom in das allgemeine Netz (16) einzuspeisen, und dass die Mittel (25) zur Einstellung der von dem Wasserkraftwerk (2) erzeugten Leistung von einer Steuereinheit (26) gesteuert werden, die laufend die von dem Solarkraftwerk (1) gelieferte Leistung (a') misst und zu jedem Zeitpunkt die von dem Wasserkraftwerk (2) zu liefernde zusätzliche Leistung (b') berechnet, um die Mittel (25) zur Einstellung der Leistung so zu steuern, dass die von der Lieferstation (15) in das allgemeine Verteilernetz (16) eingespeiste Gesamtleistung (c'=a'+b') ständig auf einem im Wesentlichen konstanten Wert entsprechend dem Verpflichtungsvertrag des Betreibers gehalten wird, um dem allgemeinen Netz (16) die geplante zusätzliche Leistung zu liefern.

2. Verfahren zur Erzeugung einer elektrischen Leistung nach Anspruch 1, **dadurch gekennzeichnet, dass** das Solarkraftwerk (1) ein solches ist, das eine Anordnung (11) von Photovoltaikpaneelen umfasst, die eine Fläche von mindestens einem Hektar bedeckt, um eine Nennleistung von mindestens 5 MW zu liefern.

3. Verfahren zur Erzeugung einer Elektrizität nach einem der vorhergehenden Ansprüche, **dadurch gekennzeichnet, dass** das Wasserreservoir (3) ein variables Volumen aufweist, das während der Zeiten von starker Sonneneinstrahlung gestattet, eine ausreichende Menge an Wasser für die Erzeugung einer Leistung durch die hydroelektrische Einheit (21) zu sammeln, die in der Lage ist, eine Verringerung der Erzeugung durch das Solarkraftwerks (1) während der Zeiten geringer oder keiner Sonneneinstrahlung zu kompensieren, um in relativ stabiler Weise die gesamte elektrische Leistung (c'), die in das öffentliche Verteilernetz (16) eingespeist wird, auf einem Wert der Verpflichtung des Betreibers zu halten.

4. Anlage zur Erzeugung einer elektrischen Leistung, die geeignet ist, ein elektrisches Netz zu versorgen, umfassend mindestens zwei Vorrichtungen zur Umwandlung von mindestens zwei erneuerbaren Energien, die an das Netz angeschlossen sind, jeweils eine erste Vorrichtung (1) zur Umwandlung der Energie der Sonnenstrahlung und eine zweite Vorrichtung (2) zur Umwandlung der Wasserenergie, die eine Einheit (21) zur hydroelektrischen Erzeugung aufweist, die aus einem Wasserreservoir (3) über mindestens eine Wasserströmungsleitung und Mitteln (25) zum Einstellen der von der zweiten Umwandlungsvorrichtung (2) gelieferten elektrischen Leistung versorgt wird, **dadurch gekennzeichnet, dass** das von der Anlage versorgte Netz ein in der Gesamtheit eines Gebiets allgemeines öffentliches Netz (16) für die Übertragung und Verteilung von elektrischer Energie, die von Kraftwerken sehr großer Leistungen erzeugt wird, ist, dass die erste Umwandlungsvorrichtung ein Solarkraftwerk (1) ist, das eine zusätzliche elektrische Leistung erzeugt, die laufend von einer Lieferstation (15), mit der das Solarkraftwert (1) verbunden ist, in das öffentliche Verteilernetz eingespeist wird, wobei diese zusätzliche eingespeiste Leistung einen stabilen Wert haben muss, der durch einen Verpflichtungsvertrag des Betreibers der Anlage geregelt ist, dass die zweite Umwandlungsvorrichtung ein Wasserkraftwerk (2) ist, das eine Erzeugungseinheit (21) umfasst, die über mindestens eine Strömungsleitung (22), die mit Mitteln (25) zur laufenden Einstellung der erzeugten Leistung ausgerüstet ist, an ein Wasserreservoir (3) angeschlossen ist, dass dieses Wasserkraftwert (2) eine Nennleistung der gleichen Größenordnung, wie die des Solarkraftwerks (1) aufweist und parallel an dieselbe Lieferstation (15) wie dieses angeschlossen ist, um an derselben Stelle des Netzes (16) die erzeugten elektrischen Leistungen jeweils von dem Solarkraftwerk und dem Wasserkraftwerk (2) einzuspeisen, und dass die Mittel (25) zur Einstellung der von dem Wasserkraftwerk (2) erzeugten Leistung von einer Steuereinheit (26) gesteuert werden, die laufend ein Messsignal der von dem Solarkraftwerk (1) gelieferte Leistung (a') empfängt und zu jedem Zeitpunkt die von dem Wasserkraftwerk (2) zu liefernde Leistung (b') berechnet, um die Mittel (25) zur Einstellung des dieses versorgenden Wasserdurchflusses so zu steuern, dass die von der Lieferstation (15) in das allgemeine Verteilernetz (16) eingespeiste Gesamtleistung (c'=a'+b') ständig auf einem im Wesentlichen konstanten Wert entsprechend dem Verpflichtungsvertrag des Betreibers zur Lieferung der geplanten zusätzlichen Leistung an das allgemeine Netz (16) gehalten wird.

5. Anlage nach Anspruch 4, **dadurch gekennzeichnet, dass** das Solarkraftwerk (1) ein solches ist, das eine Anordnung (11) von Photovoltaikpaneelen umfasst, die in der Lage sind, eine elektrische Leistung von mindestens 5 MW zu liefern.

6. Anlage nach einem der Ansprüche 4 und 5, **dadurch gekennzeichnet, dass** das Wasserkraftwerk (2) in einer ausreichend geringen Entfernung von dem Solarkraftwerk (1) installiert ist, um den Transport der elektrischen Leistung (b'), die es liefert, bis zu der Lieferstation (15) ohne merklichen Energieverlust zu gestatten.

7. Anlage nach Anspruch 6, **dadurch gekennzeichnet, dass** das Wasserkraftwerk (2) mindestens einen Staudamm (23) umfasst, der über mindestens einem Wasserlauf (31) angeordnet ist und an einer Stelle platziert ist, die ermöglicht, einen Wasserstausee (3) zu realisieren, der an die hydroelektrische Einheit (21) über mindestens eine Strömungsleitung (22) angeschlossen ist und dessen Kapazität abhängig von der zu liefernden Leistung und dem Versorgungsdurchfluss durch den Wasserlauf (31) variieren kann, derart, dass der Stausee (3) ein Wasserreservoir mit variablem Volumen bildet, das in der Lage ist, Wasser gemäß der notwendigen hydroelektrischen Leistung zu liefern und zu sammeln, um die Schwankungen der von dem Solarkraftwerk gelieferten Leistung zu kompensieren.

8. Anlage nach einem der Ansprüche 4 bis 7, **dadurch gekennzeichnet, dass** das Wasserkraftwerk (2) mindestens eine Strömungsleitung großen Durchmessers (4) umfasst, die sich zwischen einer Zurückhalteschwelle (41), die bei einem ersten Niveau an dem Wasserlauf (31) oberhalb des Niveaus des Solarkraftwerks (1) angeordnet ist, und einer hydroelektrischen Einheit (21), die auf einem zweiten Niveau, kleiner als das erste liegt, erstreckt, und dass der Querschnitt der Strömungsleitung (4) unter Berücksichtigung der Entfernung zwischen der Zurückhalteschwelle (41) und der hydroelektrischen Gruppe (21) derart bestimmt ist, dass ein Wasservolumen eingegrenzt ist, das ausreichend ist, um den Betrieb des Wasserkraftwerks (2) sicherzustellen, wie auch immer die Schwankungen der verlangten Erzeugung (b') seien, wobei mindestens ein Teil des Wasserreservoirs (3) dann von dem in der Strömungsleitung (4) enthaltenen Wasser gebildet wird.

9. Anlage nach Anspruch 8, **dadurch gekennzeichnet, dass** die Strömungsleitung (4) großen Querschnitts aus vorgefertigtem Stahlbeton oder Spannbeton hergestellt ist und im Querschnitt ein gewölbtes Element (41), das sich auf zwei Seitenelementen abstützt, die beabstandete Schenkel bilden, deren obere Bereiche sich an das gewölbte Element (41) anschließen, und eine ebene Grundfläche (44) aufweist, die auf dem Boden angeordnet ist und sich an eine vor Ort gegossene Bodenplatte (43) anschließt, um dem Profil des natürlichen Geländes zu folgen.

10. Anlage nach Anspruch 8, **dadurch gekennzeichnet, dass** die Strömungsleitung (4) großen Querschnitts eine Reihe von gebogenen Elementen (45) aus Metallblech umfasst, die miteinander aufeinanderfolgend verschweißt sind und deren Enden an in Bereitschaft stehende Profile (46) geschweißt sind, die in eine vor Ort gegossene Betonbasis (47) einzementiert sind, derart, dass dem natürlichen Geländeprofil gefolgt wird.

11. Anlage nach einem der Ansprüche 4 bis 10, **dadurch gekennzeichnet, dass** sie ein Puffersystem (5) aufweist, das an die Lieferstation (15) angeschlossen ist und das gestattet, Energie zu speichern und zu dem Verteilernetz (16) im Fall einer exzessiven Schwankung der zusätzlichen, von dem Wasserkraftwerk (2) zu liefernden Leistung (b') umzuverteilen.

12. Anlage nach Anspruch 11, **dadurch gekennzeichnet, dass** das Puffersystem (5) ein Schwungrad ist.

13. Anlage nach Anspruch 11, **dadurch gekennzeichnet, dass** das Puffersystem (5) eine Batterie zum Speichern mindestens eines Teils der elektrischen Leistung (c') ist, die insgesamt von dem Solarkraftwerk (1) und dem Wasserkraftwerk (2) geliefert wird.

## Claims

1. Method for generating electric power, from renewable energy, in an installation for supplying power to an electrical network comprising at least two devices for transforming at least two types of renewable energy into an electric current having characteristics matched to those of the network, namely a first device (1) for transforming solar power and a second device (2) for transforming hydropower, respectively, including a hydroelectric generator group (21) fed from a water reservoir (3) via at least one pipeline (22) through which the water flows provided with means (25) for regulating the electric power delivered by said second transformer device (2), **characterized in that** the network supplied with power by the installation is a general public grid (16) for delivering and distributing electric power, generated by very high capacity power plants, throughout a territory, **in that** the first transformer device is a solar power plant (1) generating additional electric power that is continuously injected into the public distribution grid by a delivery substation (15) to which the solar power plant (1) is connected, **in that** this additional power injected must have a stable value governed by an undertaking contract of the installation operator, **in that** the second transformer device is a hydroelectric power plant (2) comprising a generator group (21) linked to a water reservoir (3) via at least one pipeline (22) provided with means (25) for continuously regulating the power generated, **in that** this hydroelectric power plant (2) has a rated power of the same order as that of the solar power plant (1) and is connected, in parallel, to the same delivery substation (15) as the latter, in order to inject, into the general grid (16), the electric current generated, at any given time, by said hydroelectric power plant (2), and **in that** the means (25) for regulating the power generated by the hydroelectric power plant (2) are controlled by a control unit (26) that continuously measures the power (a') delivered by the solar power plant (1) and calculates, at any given time, the additional power (b') to be delivered by the hydroelectric power plant (2), in order to control the power regulating means (25) such that the overall power (c' = a' + b') injected by the delivery substation (15) into the general distribution grid (16) is continuously maintained at a value that is substantially constant corresponding to the undertaking contract of the operator, in order to deliver the set additional power to the general grid (16).

2. Method for generating electric power according to Claim 1, **characterized in that** the solar power plant (1) comprises an array (11) of photovoltaic panels covering an area of at least 1 hectare in order to deliver a rated power of at least 5 MW.

3. Method for generating electric power according to either of the preceding claims, **characterized in that** the volume of the water reservoir (3) is variable, making it possible to collect, during periods of high insolation, an amount of water that is sufficient for the hydroelectric group (21) to generate enough power to compensate for a decrease in the yield of the solar power plant (1) during periods of low or no insolation, in order to maintain the overall electric power (c') injected into the public distribution grid (16) relatively stable at a level undertaken by the operator.

4. Installation for generating electric power, capable of supplying power to an electrical network, comprising at least two devices, connected to the network, for transforming at least two types of renewable energy into electric power, namely a first device (1) for transforming solar power and a second device (2) for transforming hydropower, respectively, including a hydroelectric generator group (21) fed from a water reservoir (3) via at least one pipeline (22) through which the water flows, and means (25) for regulating the electric power delivered by said second transformer device (2), **characterized in that** the network supplied with power by the installation is a general public grid (16) for delivering and distributing electric power, generated by very high capacity power plants, throughout a territory, **in that** the first transformer device is a solar power plant (1) generating additional electric power that is continuously injected into the public distribution grid by a delivery substation (15) to which the solar power plant (1) is connected, the additional power thus injected having to have a stable value governed by an undertaking contract of the installation operator, **in that** the second transformer device is a hydroelectric power plant (2) comprising a generator group (21) linked to a water reservoir (3) via at least one pipeline (22) provided with means (25) for continuously regulating the power generated, **in that** this hydroelectric power plant (2) has a rated power of the same order as that of the solar power plant (1) and is connected, in parallel, to the same delivery substation (15), in order to inject, at the same location on the general grid (16), the electric power generated by the solar power plant (1) and by the hydroelectric power plant (2), respectively, and **in that** the means (25) for regulating the power generated by the hydroelectric power plant (2) are controlled by a control unit (26) continuously receiving a measurement signal of the power (a') delivered by the solar power plant (1) and calculating, at any given time, the power (b') to be delivered by the hydroelectric power plant (2), in order to control the means (25) for regulating the flow rate of the water fed thereto, such that the overall power (c' = a' + b') injected by the delivery substation (15) into the general distribution grid (16) is continuously maintained at a value that is substantially constant corresponding to the undertaking contract of the operator, in order to deliver the additional power set by contract to the general grid (16).

5. Installation according to Claim 4, **characterized in that** the solar power plant (1) comprises an array (11) of photovoltaic panels that are capable of delivering an electric power of at least 5 MW.

6. Installation according to either of Claims 4 and 5, **characterized in that** the hydroelectric power plant (2) is sited quite a short distance away from the solar power plant (1) in order to allow the electric power (b') delivered thereby to be transmitted to the delivery substation (15) without substantial energy losses.

7. Installation according to Claim 6, **characterized in that** the hydroelectric power plant (2) includes at least one dam (23) constructed on at least one watercourse (31) and sited at a location allowing an impoundment (3) that is linked to the hydroelectric group (21) by at least one pipeline (22) to be formed, the capacity of which impoundment may vary according to the power to be delivered and the supply flow rate of the watercourse (31), such that the impoundment (3) forms a water reservoir of variable volume capable of delivering or of collecting water according to the hydroelectric power required to compensate for the variations in the power delivered by the solar power plant (1).

8. Installation according to one of Claims 4 to 7, **characterized in that** the hydroelectric power plant (2) comprises at least one large-diameter pipeline (4) extending between a retaining weir (41) constructed, at a first level, on a watercourse (31), above the level of the solar power plant (1), and a hydroelectric group (21) sited at a second level, lower than the first level, and **in that** the cross section of said pipeline (4) is determined, taking into account the distance between the retaining weir (41) and the hydroelectric group (21), so as to delimit a volume of water that is sufficient to ensure the operation of the hydroelectric power plant (2) regardless of the variations in the required yield (b'), at least a portion of the water reservoir (3) then consisting of the water contained in said pipeline (4).

9. Installation according to Claim 8, **characterized in that** the large-diameter pipeline (4) is made from prefabricated reinforced or prestressed concrete elements and includes, in cross section, a vault element (41) bearing against two side elements (42) forming abutments having an upper portion connecting to the vault element (41) and a flat base (44) resting on the ground and connecting to a slab (43) poured in situ in order to conform to the profile of the natural terrain.

10. Installation according to Claim 8, **characterized in that** the large-diameter pipeline (4) comprises a series of curved elements (45) made of sheet metal that are welded one after the other and have their ends welded to projecting sections (46) that are embedded in a concrete base (47) poured in situ in order to conform to the profile of the natural terrain.

11. Installation according to one of Claims 4 to 10, **characterized in that** it includes a buffer system (5) that is connected to the delivery substation (15) and allows energy to be stored or to be redistributed to the distribution grid (16) in the event of excessive variation in the additional power (b') to be delivered by the hydroelectric power plant (2).

12. Installation according to Claim 11, **characterized in that** the buffer system (5) is a flywheel.

13. Installation according to Claim 11, **characterized in that** the buffer system (5) is a battery for accumulating at least a portion of the electric power (c') delivered overall by the solar power plant (1) and the hydroelectric power plant (2).
